# EUROPÄISCHE PATENTSCHRIFT

(11) **EP 4 335 027 B1**
(45) Veröffentlichungstag und Bekanntmachung des Hinweises auf die Patenterteilung: **29.10.2025**
(21) Anmeldenummer: 23700187.0
(22) Anmeldetag: 10.01.2023
(51) Int. Cl.: H02M 7/487, H02P 27/14, H02P 23/00, H02P 25/022

(54) **ELEKTRISCHES ANTRIEBSSYSTEM SOWIE VERFAHREN**
ELECTRICAL DRIVE SYSTEM AND METHOD
SYSTÈME ET PROCÉDÉ D'ENTRAÎNEMENT ÉLECTRIQUE

(30) Priorität: 07.02.2022 DE 102022201229
(43) Veröffentlichungstag der Anmeldung: 13.03.2024
(73) Patentinhaber: DeepDrive GmbH, 85748 Garching bei München (DE)
(72) Erfinder: ROSEN, Alexander, 49090 Osnabrück (DE); RÖMMELMAYER, Christopher, 82256 Fürstenfeldbruck (DE); HABERSBRUNNER, Maximilian, 80999 München (DE)
(74) Vertreter: Isarpatent
(86) Internationale Anmeldenummer: PCT/EP2023/050377
(87) Internationale Veröffentlichungsnummer: WO 2023/147965

(56) Entgegenhaltungen:
- WO-A2-2023/006441
- DE-A1- 102013 101 956
- DE-A1- 102021 003 941
- JP-A- H04 334 976
- US-A1- 2003 184 245
- PENG HONGWU ET AL: "Practical Design and Evaluation of a High-Efficiency 30-kVA Grid-Connected PV Inverter with Hybrid Switch Structure", 2020 IEEE ENERGY CONVERSION CONGRESS AND EXPOSITION (ECCE), IEEE, 11 October 2020 (2020-10-11), pages 3670 - 3676, XP033851338, DOI: 10.1109/ECCE44975.2020.9236341

## Beschreibung

### GEBIET DER ERFINDUNG

Die vorliegende Erfindung betrifft ein elektrisches Antriebssystem zum Antreiben eines Kraftfahrzeugs sowie ein Verfahren zum Betreiben eines solchen elektrischen Antriebssystems.

### TECHNISCHER HINTERGRUND

Ein Wechselrichter, auch Inverter oder Drehrichter genannt, ist ein elektrisches Gerät, das Gleichspannung in Wechselspannung umwandelt. Solche Wechselrichter finden zum Beispiel Anwendung in modernen Kraftfahrzeugen, in der Photovoltaik (Solarinverter), als Komponenten bei Frequenzumrichtern und vielen anderen Anwendungen, bei denen aus einer Gleichspannung eine geeignete Wechselspannung erzeugt werden soll. Derartige Wechselrichter sowie deren Anwendungsgebiete sind in vielfältigen schaltungstechnischen Varianten allgemein bekannt, sodass auf deren schaltungstechnischen Aufbau und Funktionsweise nicht näher eingegangen werden muss.

Bei modernen Kraftfahrzeugen werden - unter anderem auch aus Nachhaltigkeitsgründen und zur Vermeidung von CO2-Emmision - zunehmend elektrisch gespeiste Antriebssysteme eingesetzt. Derartige Antriebssysteme beinhalten zum Beispiel ein oder mehrere elektrische Maschinen, wie etwa Synchronmaschinen oder Asynchronmaschinen, welche über eine mehrphasige Wechselspannung gespeist werden. Zur Erzeugung der Wechselspannung werden im Allgemeinen so genannte zwei-Stufen Wechselrichter (auch 2-Level Wechselrichter oder kurz 2L-Wechselrichter genannt) eingesetzt. Bei zwei-Stufen Wechselrichtern wird aus der Gleichspannung einer Gleichspannungsquelle eine Wechselspannung mit zwei Spannungsniveaus erzeugt.

Zwei-Stufen Wechselrichtern haben sich insbesondere im Bereich Antriebswechselrichter für Elektrofahrzeuge gegenüber anderen Wechselrichtertopologien durchgesetzt. Derzeit werden bei zwei-Stufen Wechselrichtern überwiegend IGBT-Schaltelemente eingesetzt. Ein Beispiel eines solchen zwei-Stufen Wechselrichters ist zum Beispiel in dem Paper von H. v. Hoeck, "Power Electronic Architectures for Electric Vehicle", erschienen in dem vom IEEE im Jahr 2010 herausgegebenen Buch "Emobility - Electrical Power Train" beschrieben.

Neben der eben genannten zwei-stufigen Wechselrichtertopologie existieren auch drei- oder mehrstufige Wechselrichtertopologien, mit denen also drei- oder mehrstufige Spannungsniveaus erzeugbar sind. Beispiele von mehrstufigen Wechselrichtertopologien sind zum Beispiel in der US 10,903,758 B2 oder der US 2017/0185130 A1 beschrieben.

Die Vorteile mehrerer Spannungslevel sind geringere Oberschwingungen, eine langsamere Spannungsänderung an den Phasenausgängen, geringe elektromagnetische Emissionen (EME) sowie vor allem die Verarbeitung von höheren Spannungen. Aus diesen Gründen werden solche drei- oder mehr-Stufen Wechselrichter derzeit vornehmlich für Hochspannungsanwendungen eingesetzt. Energietechnische Anwendungen, wie z.B. Solarwechselrichter oder Windkraftanlagen, sind dabei etablierte Einsatzbereiche solcher drei- oder mehrstufiger Wechselrichtertopologien. Höhere Spannungen sind bei Elektrofahrzeugen (mit Spannungen von z.B. 400V) nicht zu finden. In der Photovoltaik sind demgegenüber Spannungen von mehr als 1kV üblich, bei anderen erneuerbaren Energien, wie etwa der Windenergie, liegen die Spannungen noch deutlich darüber.

Die eben genannten Vorteile von drei- oder mehrstufigen Wechselrichtern sind der herrschenden Meinung zufolge jedoch nicht ausreichend, um deren Einsatz bei elektrischen Antrieben von Elektrofahrzeugen zu rechtfertigen, wie dies in dem Artikel von Andreas Bubert et. al., "Experimental Validation of Design Concepts for Future EV-Traction Inverters", 2018 IEEE Transportation Electrification Conference and Expo (ITEC), Seiten 795-802 ausgeführt wurde. Aus all diesen Gründen werden drei- oder mehrstufigen Wechselrichtertopologien bei elektrisch angetriebenen Kraftfahrzeugen heute nicht eingesetzt.

Darüber hinaus wird noch auf die folgenden Patentveröffentlichungen US 2003/184245 A1, DE 10 2013 101956 A1, JP H04 334976 A, WO 2023/006441 A2 und DE 10 2021 003941 A1 sowie die IEEE-Druckschrift Peng Hongwu, et al: "Practical Design and Evaluation of a High-Efficiency 30-kVA Grid-Connected PV Inverter with Hybrid Switch Structure), 2020 IEEE Energy Conversion Congress and Exposition (ECCE), IEEE, 11. Oct. 2020, pages 3670-3676, XP033851338 hingewiesen.

### ZUSAMMENFASSUNG DER ERFINDUNG

Der vorliegenden Erfindung liegt nun die Aufgabe zugrunde, einen drei- oder mehrstufigen Wechselrichter anzugeben, der für den effizienten Einsatz bei elektrischen Antriebssystemen von Kraftfahrzeugen geeignet ist. Insbesondere stellt sich die vorliegende Erfindung die weiteren optionalen Aufgaben, die Effizienz eines mit einem Doppelrotor aus flussführendem Material aus Vollmaterial ausgestatteten elektrischen Antriebssystems zu verbessern und/oder ein besseres Kosten/Nutzen-Verhältnis im Vergleich zu zwei-stufigen Wechselrichtern zu ermöglichen.

Erfindungsgemäß wird diese Aufgabe durch ein elektrisches Antriebssystem mit den Merkmalen des Patentanspruches 1 und/oder durch ein Verfahren mit den Merkmalen des Patentanspruches 15 gelöst.

Der vorliegenden Erfindung liegt die Erkenntnis zugrunde, dass bei elektrischen Antrieben für Kraftfahrzeuge derzeit im Wesentlichen zweistufige Wechselrichter zum Einsatz kommen. Drei- oder mehrstufige Wechselrichter sind derzeit meist bei nicht-automobilen (Hochspannungs-)Anwendungen zu finden. Der mit der Verwendung von drei- oder mehrstufigen Wechselrichtern einhergehende Zusatznutzen rechtfertigt bei automobilen Anwendungen die damit einhergehenden Mehrkosten bislang nicht.

Die vorliegende Erfindung löst dieses Problem durch die Verwendung einer speziellen Wechselrichterschaltung verbunden mit einer Anpassung des gesamten Antriebssystems, wodurch zwar eine Erhöhung des Gesamtnutzens möglich ist, ohne dass damit eine Erhöhung der Kosten einhergeht.

Eine der vorliegenden Erfindung zugrundeliegende Überlegung besteht in der Verwendung eines neuartigen steuerbaren drei- oder mehrstufigen Wechselrichters, der in einem Drei- oder Mehrstufenbetrieb (nachfolgende als 3L-Betrieb bezeichnet) und in einem Zweistufenbetrieb (nachfolgende als 2L-Betrieb bezeichnet) betreibbar ist. Eine eigens dafür vorgesehen Betriebsmodus-Einstelleinrichtung stellt dabei den jeweiligen Betriebsmodus ein, indem die Leistungsschalter des Wechselrichters in geeigneter Weise angesteuert werden. Die Einstellung des Betriebsmodus erfolgt dabei nach Maßgabe der Gesamteffizienz des gesamten Antriebssystems - und damit nicht etwa nur auf der Basis der elektrischen Maschine und/oder des verwendeten Wechselrichters. Für die Gesamteffizienz kann in erster Linie der Phasenstrom der elektrischen Maschine herangezogen werden. Für die Gesamteffizienz können darüber hinaus neben dem erfassten Phasenstrom der elektrischen Maschine - zusätzlich - auch weitere die Gesamteffizienz beeinflussende Eigenschaften der elektrischen Maschine und des Wechselrichters berücksichtigt werden.

Die Idee der vorliegenden Erfindung besteht nun darin, die Verluste vor allem bei kleinen Lasten zu reduzieren, indem der Wechselrichter in diesem Fall in einem 3L-Betrieb betrieben wird. Dabei werden die Verluste des Wechselrichters in allen Betriebspunkten höchstens unwesentlich erhöht oder sogar verringert. Die Gesamteffizienz des Antriebssystems, also des Wechselrichters und der elektrischen Maschine, steigt damit besonders bei Anwendung in elektrisch angetriebenen Fahrzeugen signifikant an.

Der Kern der vorliegenden Erfindung besteht nun in der Verwendung einer speziellen elektrischen Maschine, die mit einem Doppelrotor aus massiven Rotormaterial, also in Vollbauweise, ausgestattet ist. Derartige Elektromotoren weisen besonders hohe Verluste auf. Die vorliegende Erfindung löst das Problem hoher Verluste im Doppelrotor aus Massivmaterial in bekannten elektrischen Maschinen. Die hier zugrundeliegende Erkenntnis besteht darin, dass elektrische Maschinen mit Doppelrotor aus Vollmaterial hohe Verluste im Rotor aufweisen. Konstruktiv können die Verluste in der elektrischen Maschine nicht oder nur unwesentlich verringert werden. Eine Verringerung der Verluste durch Frequenzerhöhung im 2L-Betrieb zeigt nur geringe Wirkung und erhöht die Verluste im Wechselrichter, was wiederum die Gesamteffizienz beeinflusst. Der grundlegende Mechanismus zur Verringerung der Verluste im Massivmaterial des Doppelrotors basiert darauf, dass die Amplitude derjenigen magnetischen Flussdichte im Massivmaterial des Doppelrotors verringert werden sollte, welche nicht zur Drehmomentbildung beiträgt. Dieser Anteil, welche durch Oberwellen in der Flussdichte definiert ist, ist näherungsweise im Quadrat seiner Amplitude direkt proportional zur Änderung der THD-induzierten Verluste. Somit führt also eine Änderung der Wechselrichter-Schaltfrequenz zu einer indirekt proportionalen linearen Veränderung der Verluste und ist daher weniger effektiv. Eine Verlustverringerung im massiven Material trägt wesentlich zur Reduzierung der Gesamtverluste der elektrischen Maschine bei und zu deren wirtschaftlichem Einsatz. Die sich daraus ergebende Erkenntnis, die Teil der vorliegenden Erfindung ist, besteht also darin, dass die Verluste in der elektrischen Maschine durch eine Wechselrichterschaltung, die ausschließlich die Amplitude der Oberwellen in der Flussdichte reduziert, effektiv verringert werden können.

Um dies zu erreichen, wurden folgende Maßnahmen und Aspekte bei der Ausgestaltung und bei der Wahl der Betriebsweise des Wechselrichters in Betracht gezogen:
Die Funktion des 2L-Wechselrichters wird durch die Funktion eines eigens dafür vorgesehenen steuerbaren 3L-Wechselrichters ersetzt, um die Oberschwingungen an den Phasenausgängen des Wechselrichters zu reduzieren. Dadurch reduzieren sich die Oberschwingungen in der Flussdichte und im Statorstrom. Eine Frequenzänderung ist hierfür nicht notwendig.

Durch eine Erhöhung der Schaltfrequenz im 2L-Betrieb reduzieren sich die Verluste zwar ebenfalls, jedoch wird davon abgesehen, da dadurch die Schaltverluste im Wechselrichter ebenfalls stark ansteigen würden und die Gesamteffizienz somit nicht signifikant verbessert wird. Eine Erhöhung der Schaltfrequenz könnte die Verlustoptimierung zwar positiv unterstützen, ist aber kein wesentlicher Aspekt dieser.

Der verwendete 3L-Wechselrichter bietet drei Spannungslevel (3L) und ist vorzugsweise (jedoch nicht notwendigerweise) dreiphasig ausgeführt. Bei drei Spannungslevels und drei Phasen kann eine relative große Kosteneffizienz realisiert werden. Das System kann aber unter gleicher Ausführung aller Phasen auf beliebig viele Phasen und auf beliebig viele Spannungslevel erweitert werden.

Im Gegensatz zu bekannten 2L-Wechselrichtern sind beim Betrieb eines erfindungsgemäßen 3L-Wechselrichters aufgrund der geringeren Oberschwingungen die Leistungsverluste in der elektrischen Maschine stark verringert. Die Schaltverluste des 3L-Wechselrichters werden vergleichsweise ebenfalls reduziert, die Durchlassverluste hingegen erhöht.

Sowohl in der elektrischen Maschine als auch im 3L-Wechselrichter verändern sich die vorherrschenden Verlustmechanismen in Abhängigkeit der Last. Im 3L-Betrieb ist die Oberschwingungen geringer, sodass die Maschinenverluste stark verringert sind. Durch Oberschwingungen induzierte Verluste sind bei niedrigen Strömen dominierend. Bei größeren Strömen ändert sich der vorherrschende Verlustmechanismus und resistive Leitungs- bzw. Kupferverluste dominieren, wohingegen durch Oberschwingungen induzierte Verluste eher untergeordnet sind bzw. vergleichsweise gering ausfallen. Schaltverluste im Wechselrichter sind im 3L- Wechselrichter im Vergleich zu 2L-Wechselrichtern reduziert (näherungsweise um 50%). Bei kleinen Lasten (Strömen) sind diese Schaltverluste vorherrschend, wohingegen bei größeren Strömen Leitungsverluste dominieren und ein 2L-Betrieb effizienter ist. Diese Erkenntnisse führen zu der erfindungsgemäßen Idee, bei niedrigen Lasten einen 3L-Wechselrichter und bei hohen Lasten einen 2L-Wechselrichter zu verwenden. Mittels des erfindungsgemäßen steuerbaren drei- oder mehrstufigen Wechselrichters ist dieser Betrieb möglich.

Insgesamt lassen sich somit - vor allem bei mit Doppelrotormotoren ausgestatteten elektrischen Maschinen - die Vorteile des 2L-Betriebs mit den Vorteilen des 3L-Betriebs kombinieren, um so insgesamt die Gesamteffizienz des elektrischen Antriebssystems im Vergleich zu bekannten elektrischen Antriebssystemen signifikant zu verbessern.

Wesentlich dabei ist, dass die Betriebsmodus-Einstelleinrichtung nicht notwendigerweise hart vom 2L-Betrieb in den 3L-Betrieb und umgekehrt umschaltet. Vielmehr wäre auch denkbar, wenn eine solches Umschalten stattdessen sukzessive erfolgt, beispielsweise indem ein Fading von den inneren Leistungsschaltern zu den äußeren Leistungsschaltern stattfindet. Dieses Fading kann zum Beispiel unter Berücksichtigung der Strommittelwerte der verschiedenen Leistungsschalter vorgenommen werden, sodass die Betriebszeiten bzw. die Zeiten, in denen die jeweiligen Leistungsschalter angeschaltet sind, berücksichtigt werden. Zusätzlich oder alternativ wäre auch denkbar, wenn die Leistungsschalter nach einer vorgegebenen Reichenfolge und/oder langsam geschaltet werden.

Die Betriebsmodus-Einstelleinrichtung beinhaltet, welche zum Beispiel eine Auswerteeinrichtung, eine Steuereinrichtung und/oder Messeinrichtungen aufweist, kann beispielsweise als Programm-gesteuerte Einrichtung, wie etwa als Mikroprozessor oder Mikrocontroller, ausgebildet sein. Denkbar wäre für diese Funktion jedoch auch eine Logikschaltung, wie etwa ein FPGA, PLD oder dergleichen.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einem bevorzugten Aspekt der vorliegenden Erfindung weist die Betriebsmodus-Einstelleinrichtung eine Auswerteeinrichtung auf. Die Auswerteeinrichtung ist dazu ausgelegt, anhand des Phasenstroms und optional zumindest einer weiteren Eigenschaft des elektrischen Antriebssystems eine Optimierung der Gesamteffizienz des elektrischen Antriebssystems vorzunehmen.

Typischerweise, jedoch nicht notwendigerweise, wird dabei die Gesamteffizienz von der Auswerteschaltung nummerisch berechnet. Zusätzlich oder alternativ kann die Gesamteffizienz anhand eines vorgegebenen Kennlinienfelds, welche zum Beispiel in einer Lookup-Tabelle abgebildet ist, ermittelt werden. Dabei kann die Ermittlung der Gesamteffizienz während des Betriebs oder etwa auch im Voraus berechnet bzw. ermittelt werden. Bevorzugterweise wird dabei in einem so genannten Offline-Betrieb die optimale, d.h. möglichst effiziente Betriebsstrategie vor dem Betrieb des elektrischen Antriebssystems, zum Beispiel numerisch, berechnet. Dies lässt sich mit vergleichsweise geringen Rechnerressourcen bewerkstelligen und ist vor allem dann zu bevorzugten, wenn eine Vielzahl von Eigenschaften bei der numerischen Vorausberechnung der optimalen Gesamteffizienz berücksichtigt werden. Zudem steht für den Offline-Betrieb mehr Zeit für die Berechnung zur Verfügung. In einem so genannten Real-Time-Betrieb ist anschließend eine sehr dynamische Ermittlung des jeweiligen Betriebsmodus (2L-Betrieb oder 3L-Betrieb) denkbar und möglich, zum Beispiel über eine Lookup-Tabelle. Beispielsweise könnte man für diese Zwecke ein trainiertes künstliches Netzwerk verwenden, welches auf der Basis von vorherigen Eigenschaften, Kennlinien und dergleichen trainiert wurde.

Einer bevorzugten Ausgestaltung zufolge weist die Auswerteeinrichtung ein Optimierungsmodul auf, welches dazu ausgebildet ist, die Gesamteffizienz zunächst zu ermitteln. Alternativ oder zusätzlich kann anschließend über eine Optimierungsfunktion die Gesamteffizienz unter Berücksichtigung des Phasenstroms sowie optional zumindest einer weiteren Eigenschaft optimiert werden. Die Optimierung der Gesamteffizienz kann dabei analytisch und/oder über eine geeignete Lookup-Table, welche zum Beispiel vorher generiert wurde, erfolgen.

Der jeweils verwendete Betriebsmodus (z.B. 2L-Betrieb oder 3L-Betrieb) wäre zum Beispiel ein die Gesamteffizienz beeinflussende Eigenschaft der elektrischen Maschine. Eine weitere Eigenschaft kann in der speziellen Ausgestaltung des Rotors der elektrischen Maschine gesehen werden, etwa dergestalt, dass der Rotor ein Doppelrotor ist und/oder dass der Doppelrotor aus flussführendem Material aus Vollmaterial ausgebildet ist.

Gemäß einem bevorzugten Ausführungsbeispiel weist die Betriebsmodus-Einstelleinrichtung eine Messeinrichtung auf:
Diese Messeinrichtung weist zumindest einen Sensoreingang auf, über den die erste Messeinrichtung mit der elektrischen Maschine koppelbar ist. Die erste Messeinrichtung ist dabei dazu ausgebildet, den Phasenstrom, zu erfassen.

Gemäß einem bevorzugten Ausführungsbeispiel beinhaltet der Wechselrichter eine T-Typ neutralpunkt geklemmte (TNPC = t-type neutral point clamped) Wechselrichterarchitektur. Diese weisen gegenüber mehrstufigen Active Neutral Point Clamped-(ANPC) Wechselrichtertopologien diverse Vorteile auf: Im Gegensatz zu ANPC Topologien sind nicht vier, sondern maximal drei Schalter in Serie leitend und somit die Durchlassverluste geringer. Die Ausgangsspannungsformen sind identisch, was zu ähnlich geringen Schaltverlusten führt, jedoch ist bei höheren Schaltfrequenzen (zum Beispiel >10kHz) die benötigte Gesamtchipfläche der TNPC-Topologie im Vergleich zur Zwei-Level Topologie geringer. Ähnlich wie bei ANPC, kann auch bei TNPC eine hybride Wechselrichtertopologie aufgebaut werden, um die Effizienz weiter zu erhöhen und/oder die Herstellungskosten zu optimieren. Zum Beispiel können hierfür im Nullpotential- oder mittleren Brückenzweig unterschiedliche Schaltertechnologien verwendet werden. Vor allem im Falle eines vollständig mit IGBTs (Insulated Gate Bipolar Transistor) aufgebauten TNPC-Wechselrichters können die Verluste unter Verwendung von Galliumnitrid (GaN) drastisch reduziert werden. Eine Verwendung der hybriden TNPC-Wechselrichtertopologie in Motorregelungen auch in Elektrofahrzeugen ist möglich, in der Praxis aber nicht vorzufinden.

TNPC-basierte 3L-Wechselrichter können in zwei Betriebsarten betrieben werden, um die Systemeffizienz zu erhöhen. Bei 3L-TNPC Wechselrichtern können die Nullpotential (mittleren) Brückenzweige abgeschaltet werden, um im 2L-Betrieb zu arbeiten, und hinzugeschaltet zu werden, um in den 3L-Betrieb zu wechseln. Zwischen beiden Betriebsmodi wird gewechselt, um den Systemwirkungsgrad zu erhöhen. Dafür wird die Last in der Steuer- und Regelungslogik gemessen und mit Hilfe einer zuvor ermittelten Optimierungskennlinie zwischen 2L- und 3L-Operation gewechselt.

Zusätzlich oder alternativ können TNPC-basierte 3L-Wechselrichter asymmetrisch ausgelegt werden, um die Kosten des Wechselrichters zu reduzieren. Die Asymmetrie bezieht sich auf die Stromtragfähigkeit der Nullpotential (mittleren) Brückenzweige, welche geringer ist als die der äußeren Brückenzweige. Dies ist möglich, da die Nullpotential-Brückenzweige bei höheren Lasten nicht mehr genutzt werden, um die Gesamteffizienz zu optimieren. Die äußeren Brückenzweige sind auf Spitzenströme und die Nullpotential-Brückenzweige auf kleine oder kontinuierliche Ströme ausgelegt.

Gemäß einem Ausführungsbeispiel der Erfindung weist der Wechselrichter eine erste Treiberstufe und zumindest eine zweite Treiberstufe auf. Die zweite Treiberstufe ist dazu ausgelegt, Ausgangslastströme an den Lastausgang zu führen, welche kleiner sind als die von der ersten Treiberstufe bereit gestellten Ausgangslastströme.

Vorzugsweise ist dabei die Betriebsmodus-Umschalteinrichtung dazu ausgelegt, den Wechselrichter derart zu steuern, dass abhängig von der Gesamteffizienz im drei- oder mehrstufigen Betrieb die erste Treiberstufe sowie die zweite Treiberstufe aktiviert sind und im zwei-stufigen Betrieb zumindest eine der Treiberstufen deaktiviert ist, vorzugsweise die innere, zweite Treiberstufe.

Typischerweise, jedoch nicht notwendigerweise, weist die erste Treiberstufe zumindest eine Brückenschaltung, insbesondere eine Halbbrückenschaltung, auf, deren Mittelabgriff den Ausgangslastanschluss der Wechselrichterschaltung bildet. Jede Brückenschaltung weist dabei zumindest einen ersten (Halbleiter-)Leistungsschalter auf, welche mit einem ersten Versorgungsanschluss (welcher zum Beispiel mit einem positiven Versorgungspotential beaufschlagt ist) verbunden sind und welche dazu ausgelegt sind, am Lastausgang eine erste Spannungsstufe bereitzustellen. Jede Brückenschaltung weist ferner zumindest einen zweiten (Halbleiter-)Leistungsschalter auf, welche mit einem zweiten Versorgungsanschluss (welcher zum Beispiel mit einem negativen Versorgungspotential oder einem Bezugspotenzial beaufschlagt ist) verbunden sind und welche dazu ausgelegt sind, am Lastausgang eine zweite Spannungsstufe bereitzustellen. Die halbleiterbasierten Leistungsschalter können mit verschiedenen beliebig wählbaren Halbleitermaterialien realisiert werden. Üblicherweise eingesetzte Materialien sind Si (Silizium) für IGBTs und MOSFETs, SiC (Siliziumkarbid) für MOSFETs und GaN (Galliumnitrid) für MOSFETs.

Typischerweise, jedoch nicht notwendigerweise, weist die zweite Treiberstufe zumindest einen dritten Leistungsschalter auf, deren Laststrecken in Reihe zwischen einer Zwischenkreisschaltung und dem Mittelabgriff der ersten Treiberschaltung geschaltet sind. Die Leistungsschalter der zweiten Treiberstufe sind dazu ausgelegt, am Lastausgang einen dritten Spannungslevel, der zwischen dem ersten und dem zweiten Spannungslevel liegt, bereitzustellen.

Im Fall einer bevorzugten, so genannten homogenen Wechselrichtertopologie sind alle Leistungsschalter des Wechselrichters, also die Leistungsschalter der ersten Treiberstufe und/oder der zweiten Treiberstufe, als Halbleiterschalter desselben Schaltertyps und/oder derselben Halbleitertechnologie ausgebildet. Schaltertypen sind zum Beispiel, Bipolartransistoren, Feldeffekttransistoren (wie etwa MOSFETs, JFETs, etc.), Thyristoren, IGBTs, etc.. Unter der Halbleitertechnologie wird diejenige Halbleitertechnologie bezeichnet, auf deren Basis der Leistungsschalter hergestellt wird, wie etwa auf Basis der Si-, SiC-, GaAs- oder GaN-Technologie.

In einer ersten, bevorzugten Variante der homogenen Wechselrichtertopologie sind die Halbleiterschalter als GaN-Leistungsschalter, zum Beispiel als GaN-MOSFET, ausgebildet. In einer zweiten, besonders bevorzugten Variante sind die Halbleiterschalter als SiC-Leistungsschalter, insbesondere als SiC-MOSFETs, ausgelegt. Darüber hinaus wären IGBT-basierte Leistungsschalter, beispielsweise Silizium-basierte IGBTs mit Si-Diode oder SiC-Diode, ebenfalls denkbar

Im Fall einer besonders bevorzugten, so genannten hybriden Wechselrichtertopologie sind für die Halbleiterschalter des Wechselrichters, also für die Halbleiterschalter der ersten Treiberstufe und/oder für die Halbleiterschalter der zweiten Treiberstufe, zumindest zwei unterschiedliche Schaltertypen und/oder zumindest zwei unterschiedliche Halbleitertechnologien vorgesehen. Bei der hybriden Wechselrichtertopologie werden innerhalb des Wechselrichters nicht die gleichen Halbleitermaterialien für alle Leistungsschalter verwendet. Insbesondere wird für die Leistungsschalter des Nullpotential-Brückenzweiges, also für die zweite Treiberstufe, eine andere Technologie (andere Schaltertypen) verwendet als für die äußeren Schalter der ersten Treiberstufe. Dadurch realisiert man Effizienzvorteile bedingt durch reduzierten Schalt- und Durchlassverlusten. Zusätzlich ergeben sich auch Kostenvorteile. Empfehlenswert ist insbesondere die Optimierung der Leistungsschalter in den Nullpotential-Brückenzweigen (zweite Treiberstufe) auf niedrige Schaltverluste und möglichst geringe Reverse-Recovery Verluste. Dies ist sinnvoll, da die Nullpotential-Brückenzweige (zweite Treiberstufe) bei geringen Strömen aktiviert sind und niedrige Reverse-Recovery Verluste zudem die Schaltverluste in den äußeren Schaltern reduzieren. Ein hybrides Design ist insbesondere dann zu empfehlen, wenn der Wechselrichter asymmetrisch ausgelegt ist. Je geringer die Stromtragfähigkeit der Nullpotential-Brückenzweige (zweite Treiberstufe) ist, desto geringer sind die Mehrkosten für schaltverlustoptimierte Schalter.

In einer ersten, besonders bevorzugten Variante sind die Halbleiterschalter der ersten Treiberstufe als IGBTs (Silizium oder SiC) mit Freilaufdiode ausgebildet. In diesem Fall können die Halbleiterschalter der zweiten Treiberstufe vorzugsweise als SiC-Leistungsschalter, insbesondere als SiC-MOSFETs, ausgebildet sein.

In einer zweiten, gleichfalls bevorzugten Variante sind die Halbleiterschalter der ersten Treiberstufe als SiC-MOSFETs ausgelegt. In diesem Fall können die Halbleiterschalter der zweiten Treiberstufe als GaN-basierte MOSFETs ausgelegt sein.

In einer dritten bevorzugten Variante sind die Halbleiterschalter der ersten Treiberstufe als IGBTs mit Freilaufdiode ausgelegt. In diesem Fall können die Halbleiterschalter der zweiten Treiberstufe als GaN-Leistungsschalter, insbesondere als GaN-MOSFETs, ausgelegt sein.

Gemäß einem besonders bevorzugten Ausführungsbeispiel besteht das flussführende Material im Rotor aus Eisen oder einer Eisenlegierung. Elektrische Drehfeldmaschinen - und hier vorzugsweise Synchronmaschinen mit Doppelrotor - können im Rotor mit flussführendem Material in Massivbauweise d.h. aus Vollmaterial, ausgeführt werden. Das ist damit zu begründen, dass in einer idealisierten Betrachtung bei Synchronmaschinen keine periodische Relativbewegung zwischen dem Richtungsvektor des von der Ständerwicklung erzeugten Drehfelds und dem Doppelrotor stattfindet. Die magnetische Flussdichte in einem Betriebspunkt ist damit konstant und es treten keine Eisenverluste im Material auf. Bei solchen permanentmagneterregten Maschinen, deren Magnete auf der Läuferoberfläche montiert sind, ermöglicht der hierdurch gewährleistete Abstand zwischen Ständernuten und flussführendem Material den Einsatz von Vollmaterial ohne ein Ansteigen der Zusatzverluste.

Gemäß einem ebenfalls besonders bevorzugten Ausführungsbeispiel weist die elektrische Maschine einen Stator mit einem Ständer auf, wobei der Ständer zur Führung eines vorrangig radialen Magnetflusses, insbesondere zur Vermeidung einer Magnetflussführung in tangentialer Richtung, ausgebildet ist. Es handelt sich somit um eine so genannte "jochlose" Ausführung des Stators, die insbesondere eine Magnetflussführung in umfänglicher Richtung vermeidet. Ein magnetischer Rückschluss im Ständer ist dabei nicht erforderlich, wodurch Gewicht und Eisenverluste reduziert werden.

Gemäß einer Ausführungsform weist der Ständer des Stators eine radiale Jochdicke auf, welche weniger als 30%, vorzugsweise weniger als 20%, besonders bevorzugt weniger als 10% einer gesamten radialen Ständerdicke beträgt. Bei einer so genannten "jochlosen" Ausführung wird auf diese Weise dennoch eine mechanische Verbindung der Ständerzähne bereitgestellt, was elektromagnetisch jedoch nicht notwendig wäre und worüber auch kein funktionsrelevanter Magnetfluss stattfindet. Der Begriff "jochlos" bezieht sich somit auf die elektromagnetische Auslegung des Ständers.

Gemäß einem ebenfalls besonders bevorzugten Ausführungsbeispiel ist die Synchronmaschine eine dreiphasige Synchronmaschine ist. In diesem Fall ist die Wechselrichterschaltung vorzugsweise zumindest als Dreiphasenwechselrichter ausgebildet. Eine Erkenntnis der vorliegenden Erfindung besteht auch darin, dass Synchronmaschinen, die sich einer drei- oder mehrstufigen Wechselrichtertopologie bedienen, eine wesentlich verbesserte Gesamteffizienz des Antriebssystems zeigen.

Gemäß einem ebenfalls besonders bevorzugten Ausführungsbeispiel ist die elektrische Maschine als Radnabenmotor für ein elektrisch betreibbares Kraftfahrzeug ausgebildet. Ein Radnabenmotor ist eine elektrische Maschine, die direkt in ein Rad und insbesondere in die Nabe eines Fahrzeugs eingebaut ist und gleichzeitig die Radnabe trägt. Ein Teil des Nabenmotors überträgt das erzeugte Drehmoment direkt auf das anzutreibende Rad, mit dem er umläuft. Bei elektrischen Radnabenmotoren sind dabei sowohl Innen- als auch Außenläufermotoren denkbar. Hauptvorteil von solchen elektrischen Radnabenmotoren in Fahrzeugen ist gegenüber Antriebskonzepten mit einem zentralen Motor der Wegfall des klassischen Antriebsstrangs mit den je nach Ausprägung notwendigen Komponenten (Getriebe, Kardanwelle, Differenzialgetriebe, Antriebswelle, etc.). Da auch deren Übertragungsverluste wegfallen, bieten sich Potenziale zur Wirkungsgradsteigerung des gesamten Antriebssystems. Auch lässt sich bei einem elektrischen Radnabenmotor eine effiziente Rekuperation, also eine Rückgewinnung von elektrischer Energie beim Bremsen des Fahrzeugs, implementieren.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: anhand eines Blockschaltbildes ein erfindungsgemäßes elektrisches Antriebssystem;
- Fig. 2: anhand einer schematischen Querschnittsdarstellung ein Beispiel für eine elektrische Maschine des erfindungsgemäßen elektrischen Antriebssystems gemäß Figur 1;
- Fig. 3: anhand eines Blockschaltbildes eine drei- oder mehrstufige Wechselrichterschaltung für ein erfindungsgemäßes elektrisches Antriebssystem entsprechend Figur 1;
- Fig. 4: anhand eines Schaltbildes ein besonders bevorzugtes Ausführungsbeispiel einer erfindungsgemäßen Wechselrichterschaltung;
- Fig. 5: anhand eines Flussdiagramms ein erfindungsgemäßes Verfahren zum Betreiben eines elektrischen Antriebssystems.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

### BESCHREIBUNG VON AUSFÜHRUNGSBEISPIELEN

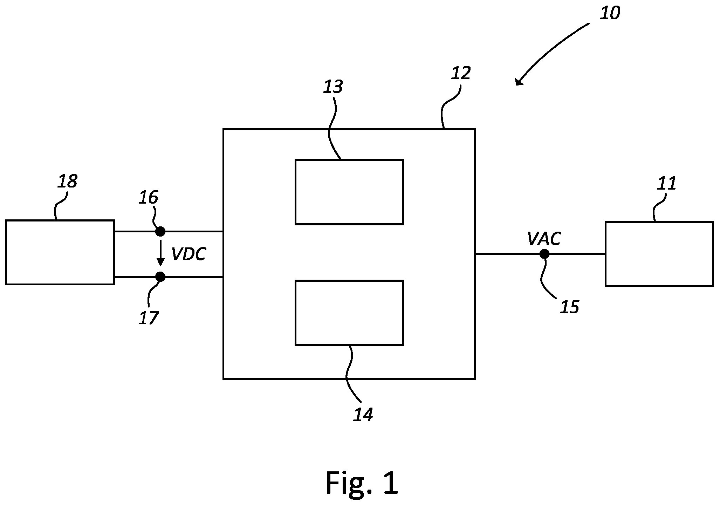

Fig. 1 zeigt anhand eines Blockschaltbildes ein erfindungsgemäßes elektrisches Antriebssystem für ein Kraftfahrzeug.

Das hier mit Bezugszeichen 10 bezeichnete elektrische Antriebssystem ist vorzugsweise - jedoch nicht notwendigerweise - für den Einsatz in einem Kraftfahrzeug vorgesehen. Das Antriebssystem 10 umfasst zumindest eine mehrphasige elektrische Maschine 11 sowie eine Wechselrichterschaltung 12.

Die elektrische Maschine 11 ist eingangsseitig mit der Wechselrichterschaltung 12 verbunden, die die elektrische Maschine 11 antreibt. Die Wechselrichterschaltung 12 ist erfindungsgemäß als drei- oder mehrstufige Wechselrichterschaltung 12 ausgebildet. Die Wechselrichterschaltung 12 weist einen Wechselrichter 13 sowie eine Betriebsmodus-Einstelleinrichtung 14 auf.

Der Wechselrichter 13 ist über seinen Lastausgang 15 mit der elektrischen Maschine 11 und über Versorgungsanschlüsse 16, 17 mit einer Versorgungsspannungsquelle 18 gekoppelt. Der Wechselrichter 13 ist dabei dazu ausgelegt, eine versorgungsseitig aufgenommene Gleichspannung VDC in eine Wechselspannung VAC zu wandeln. Der Wechselrichter 13 ist als mehrphasiger Wechselrichter 13 ausgebildet, wobei die Anzahl der Phasen des Wechselrichters 13 typischerweise der Anzahl der Phasen der elektrischen Maschine 11 entspricht. Die elektrische Maschine 11 wird über die vom Wechselrichter 13 am Lastausgang 15 bereitgestellten Phasenströme angetrieben.

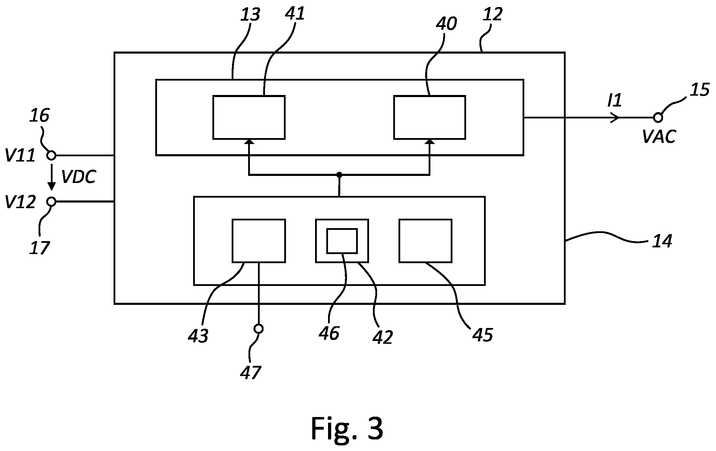

Erfindungsgemäß ist der Betriebsmodus der Wechselrichterschaltung 12 über die Betriebsmodus-Einstelleinrichtung 14, welche eingangsseitig u.a. mit der elektrischen Maschine 11 gekoppelt ist, einstellbar. Insbesondere ist über die Betriebsmodus-Einstelleinrichtung 14 einstellbar, ob der Wechselrichter 13 in einem zweistufigen Betrieb, in einem drei- oder mehrstufigen Betrieb oder in einem Mischbetrieb arbeitet. Der Mischbetrieb bezeichnet einen Betriebsmodus, bei dem der Wechselrichter sowohl in einem zweistufigen Betrieb als auch drei- oder mehrstufigen Betrieb betrieben wird, wie dies zum Beispiel bei einem Übergang von einem Betriebsmodus zum nächsten vorkommen kann. Der Aufbau und die Funktionsweise der Betriebsmodus-Einstelleinrichtung 14 wird nachfolgend anhand der folgenden Figuren 3 bis 6 noch im Detail erläutert.

Die elektrische Maschine 11 ist vorzugsweise, jedoch nicht notwendigerweise eine dreiphasige Synchronmaschine 11. In diesem Fall beinhaltet die Wechselrichterschaltung 12 vorzugsweise einen Dreiphasenwechselrichter 13.

Ebenfalls bevorzugt ist es, wenn die elektrische Maschine 11 des elektrischen Antriebssystems 10 ein Radnabenmotor für ein elektrisch betreibbares Kraftfahrzeug ist. Jedoch wären auch andere Anwendungen denkbar und vorteilhaft.

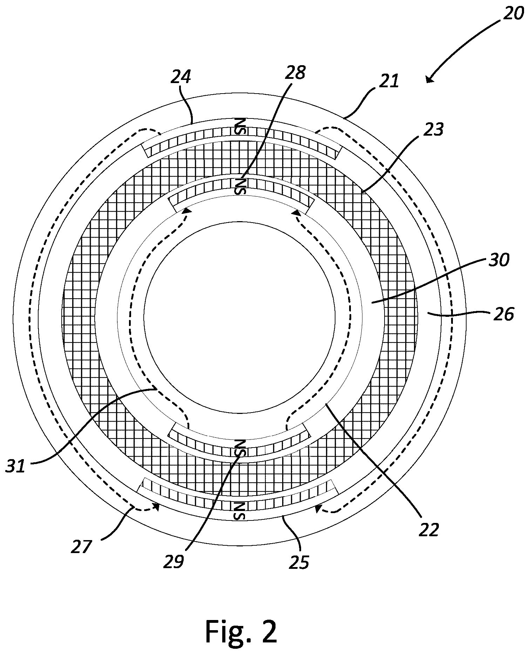

Fig. 2 zeigt anhand einer schematischen Querschnittsdarstellung ein Beispiel für eine elektrische Maschine des erfindungsgemäßen elektrischen Antriebssystems gemäß Figur 1.

Die elektrische Maschine 11 ist vorzugsweise als Synchronmaschine 11 ausgebildet. Ein für die Erfindung wesentlicher, jedoch nicht zwingend erforderlicher Aspekt ist der Umstand, dass die Synchronmaschine bzw. die elektrische Maschine 11 mit einem Doppelrotor 20 ausgestattet ist und dass der Doppelrotor ferner aus flussführendem Material aus Vollmaterial aufgebaut ist. Der Querschnitt des Doppelrotor- Synchronmaschine 11 ist in Figur 2 dargestellt. Die Doppelrotormaschine 20 umfasst dabei den äußeren Rotor 21 und den inneren Rotor 22. Zwischen den beiden Rotoren 21, 22 ist der Stator 23 in an sich bekannter Weise angeordnet. Der Stator 23 kann dabei vorzugsweise, jedoch nicht notwendigerweise, ein jochloser Stator 23 sein.

Der äußere Rotor 21 und innere Rotor 22 sind vorzugsweise nicht geblecht, sondern aus Vollmaterialaufgebaut. Der innere Rotor 22 ist dabei rohrförmig ausgebildet. Denkbar wäre jedoch eine massive, vollvolumige Ausgestaltung des inneren Rotors 22.

Zwischen dem äußeren Rotor 21 und dem Stator 23 sind im gezeigten Bespiel zwei gegenpolige Magnete 24, 25 auf der inneren Oberfläche des äußeren Rotors 21 im äußeren Luftspalt 26 aufgesetzt. Denkbar und vorteilhaft wäre es, wenn die Magnete 24, 25 in eigens dafür vorgesehenen taschenförmige Ausnehmungen äußeren Rotors 21 eingebettet sind. Denkbar wäre jedoch auch, wenn die Magnete 24, 25 vom äußeren Rotor 21 beabstandet sind, also nicht direkt auf dessen innerer Oberfläche angebracht sind. Die Flusslinien 27 zwischen Nord- und Südpol der gegenpoligen Magnete 24, 25 verlaufen hier im Kernmaterial des äußeren Rotors 21.

Zwischen dem inneren Rotor 22 und dem Stator 23 sind im gezeigten Bespiel ebenfalls zwei gegenpolige Magnete 28, 29 auf der inneren Oberfläche des inneren Rotors 22 im inneren Luftspalt 30 aufgesetzt. Auch hier können die Magnete 28, 29 in entsprechende Taschen des inneren Rotors 22 eingebettet sein oder vom inneren Rotor 22 beabstandet sein. Die Flusslinien 31 zwischen Nord- und Südpol der gegenpoligen Magnete 28, 29 verlaufen hier im Kernmaterial des inneren Rotors 22.

Das flussführende Material im äußeren und/oder inneren Rotor 21, 22 besteht dabei vorzugsweise aus massivem Eisen oder einer entsprechenden massiven Eisenlegierung.

Fig. 3 zeigt anhand eines Blockschaltbildes eine drei- oder mehrstufige Wechselrichterschaltung für ein erfindungsgemäßes elektrisches Antriebssystem entsprechend Figur 1.

Die Wechselrichterschaltung 12 umfasst dabei - wie bereits anhand der Figur erläutert, zwei Versorgungsanschlüsse 16, 17, einen Lastausgang 15, einen drei- oder mehrstufigen Wechselrichter 13 sowie eine Betriebsmodus-Einstelleinrichtung 14.

An dem ersten Versorgungsanschluss 16 ist ein erstes Versorgungspotenzial V11, beispielsweise ein positives Versorgungspotenzial, abgreifbar. An dem zweiten Versorgungsanschluss 17 ist ein zweites Versorgungspotenzial V12, beispielsweise ein negatives Versorgungspotenzial oder ein Bezugspotenzial, abgreifbar. Damit liegt zwischen den Versorgungsanschlüssen 16, 17 eine Versorgungsgleichspannung VDC=V11-V12 an.

Am Lastausgang 15 ist ein mehrphasiger Laststrom I1 abgreifbar, über welchen die verschiedenen Phasen der über den Lastausgang 15 anschließbaren elektrischen Maschine 11 betrieben werden.

Zwischen den Versorgungsanschlüssen 16, 17 und dem Lastausgang 15 ist der steuerbare drei- oder mehrstufige Wechselrichter 13 angeordnet. Der Wechselrichter 13 ist dazu ausgelegt, eine versorgungsseitig aufgenommene Gleichspannung VDC in eine Wechselspannung VAC zu wandeln, um am Lastausgang den mehrphasiger Laststrom I1 bereitzustellen.

Der Wechselrichter 13 weist eine erste Treiberstufe 40 und zumindest eine zweite Treiberstufe 41 auf. Die zweite Treiberstufe 41 ist dazu ausgelegt, Ausgangslastströme an den Lastausgang 15 zu führen, welche kleiner sind als die von der ersten Treiberstufe 40 bereit gestellten Ausgangslastströme.

Die Betriebsmodus-Einstelleinrichtung 14 dient dem Zweck, den Betriebsmodus des Wechselrichters 13 und damit der gesamten Wechselrichterschaltung 12 einzustellen und somit zu steuern. Insbesondere ist der Wechselrichter 13 dazu ausgelegt, den Wechselrichter 13 entweder in einem ersten Betriebsmodus in einem drei- oder mehrstufigen Betrieb oder in einem zweiten Betriebsmodus in einem zwei-stufigen Betrieb zu betreiben. Denkbar wäre auch zumindest ein dritter Betriebsmodus, welcher eine Mischform von zwei-stufigem Betrieb und drei- oder mehrstufigem Betrieb beinhaltet. Der dritte Betriebsmodus wäre insbesondere bei einem Übergang vom ersten Betriebsmodus in den zweiten Betriebsmodus und umgekehrt denkbar und sinnvoll.

Die Betriebsmodus-Einstelleinrichtung 14 steuert dabei den verwendeten Betriebsmodus des Wechselrichters 13 abhängig von der Gesamteffizienz des gesamten elektrischen Antriebssystems 10. Die Gesamteffizienz ist dabei eine Funktion des erfassten Phasenstroms der elektrischen Maschine 11 sowie optional zumindest einer weiteren die Gesamteffizienz beeinflussende Eigenschaft des elektrischen Antriebssystems.

Zum Zwecke der Einstellung des jeweils verwendeten Betriebsmodus umfasst die Betriebsmodus-Einstelleinrichtung 14 zumindest eine der nachfolgenden Einrichtungen:
- eine Auswerteeinrichtung 42;
- eine Messeinrichtung 43;
- eine Steuereinrichtung 45.

Die Auswerteeinrichtung 42 ist dazu ausgelegt, anhand des Phasenstroms sowie optional zumindest einer weiteren Eigenschaft eine Optimierung der Gesamteffizienz des elektrischen Antriebssystems 10 vorzunehmen. Dies kann zum Beispiel in-situ, also während des Betriebs des elektrischen Antriebssystems 10 erfolgen. Vorzugsweise wird die relativ rechenaufwändige Berechnung jedoch im Vorhinein vorgenommen, beispielsweise durch geeignete Berechnung (z.B. numerisch oder analytisch) und/oder unter Verwendung eines vorgegebenen Kennlinienfelds. Beispielsweise erfolgt die nummerische Effizienzberechnung für den 2L-Betrieb und 3L-Betrieb sowie das Abbilden der Funktion mit Entscheidungsausgang im Vorherein, also offline. Die Wahl der besseren Effizienz mit Hilfe der Umschaltung sowie die Anwendung der Lookup-Tabelle auf die Effizienzermittlung kann auch - jedoch nicht ausschließlich - mehr oder weniger dynamisch während des Betriebs vorgenommen werden.

Zum Zweck der Optimierung weist die Auswerteeinrichtung 42 ein Optimierungsmodul 46 auf. Das Optimierungsmodul 46 berechnet zunächst die Gesamteffizienz. Anschließend wird zum Beispiel über eine Optimierungsfunktion die Gesamteffizienz unter Berücksichtigung des Phasenstroms sowie optional zumindest einer Eigenschaft analytisch oder über eine Lookup-Table optimiert.

Die Betriebsmodus-Einstelleinrichtung 14 umfasst darüber hinaus auch eine erste Messeinrichtung 43. Die erste Messeinrichtung 43 weist einen Sensoreingang 47 auf. Dabei ist die Betriebsmodus-Einstelleinrichtung 14 über den Sensoreingang 47 mit der elektrischen Maschine 11 koppelbar, um den Phasenstrom der elektrischen Maschine 11 zu erfassen.

Die eigentliche Steuerung des Wechselrichters erfolgt dabei über eine eigens dafür vorgesehen Steuereinrichtung 45. Die Steuereinrichtung 45 stellt dabei den jeweiligen Betriebsmodus des Wechselrichters 13 ein, d.h. ob der Wechselrichter 13 im drei- oder mehrstufigen Betrieb oder im zwei-stufigen Betrieb betrieben wird. Die Steuereinrichtung 45 kann zum Beispiel den Wechselrichter 13 derart steuern, dass im drei- oder mehrstufigen Betrieb beide Treiberstufen 40, 41 aktiviert sind und im zwei-stufigen Betrieb die zweite Treiberstufe 40 deaktiviert ist.

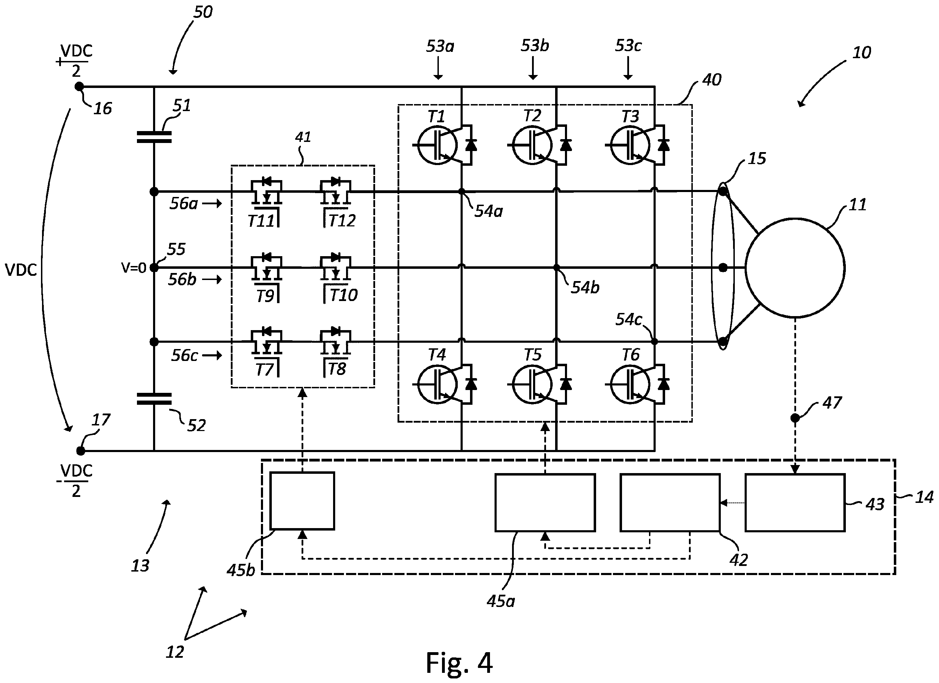

Fig. 4 zeigt anhand eines Schaltbildes ein besonders bevorzugtes Ausführungsbeispiel einer erfindungsgemäßen Wechselrichterschaltung.

An den Versorgungsanschlüssen 16, 17 liegt die Versorgungsgleichspannung VDC, wobei am ersten Versorgungsanschluss 16 das Versorgungspotenzial V11 = VDC/2 und am zweiten Versorgungsanschluss 17 das Versorgungspotenzial V12 = -VDC/2 abgreifbar ist. Denkbar wäre auch eine Konstellation, bei der am zweiten Versorgungsanschluss 17 ein Bezugspotenzial, beispielsweise das Potenzial der Bezugsmasse GND, anliegt. In dem Fall würde am ersten Versorgungsanschluss 16 das Versorgungspotenzial V11 = VDC abgreifbar sein.

Eingangsseitig des Wechselrichters 13 ist eine Zwischenkreisschaltung 50 bestehend aus einer Reihenschaltung zweier Zwischenkreiskondensatoren 51, 52 geschaltet. Die Zwischenkreisschaltung 50 fungiert als Energiespeicher.

Der in Figur 4 dargestellte Wechselrichter 13 beinhaltet eine T-Typ neutralpunkt geklemmte Wechselrichterarchitektur.

Zu diesem Zweck weist die erste, äußere Treiberstufe im gezeigten Fall eines 3-phasigen Wechselrichters drei Halbbrückenschaltungen 53a-53c auf, die bezüglich deren Laststrecken jeweils ebenfalls lastseitig zwischen den Versorgungsanschlüssen 16, 17 geschaltet sind. Die jeweiligen Mittelabgriffe 54a-54c der Halbbrückenschaltungen 53a-53c bilden jeweils eine Ausgangslastanschluss 15a-15c des Wechselrichters 13. Jede der Halbbrückenschaltungen 53a-53c weist dabei jeweils einen ersten steuerbaren Leistungsschalter T1, T2, T3 auf, die als High-Side-Schalter ausgebildet sind. Diese ersten Leistungsschalter T1, T2, T3 sind mit dem ersten Versorgungsanschluss 16 verbunden. Die ersten Leistungsschalter T1, T2, T3 sind dazu ausgelegt sind, am Lastausgang 15 eine erste Spannungsstufe bereitzustellen. Jede der Halbbrückenschaltungen 53a-53c weist ferner jeweils einen zweiten steuerbaren Leistungsschalter T4, T5, T6 auf, die als Low-Side-Schalter ausgebildet sind. Diese zweiten Leistungsschalter T4, T5, T6 sind mit dem zweiten Versorgungsanschluss 17 verbunden. Die zweiten Leistungsschalter T4, T5, T6 sind dazu ausgelegt, am Lastausgang 15 eine zweite Spannungsstufe bereitzustellen.

Die zweite, innere Treiberstufe 41 ist zwischen dem Mittelabgriff 55 der Zwischenkreisschaltung und den Ausgangslastanschlüssen 15a-15c - und somit den jeweiligen Mittelabgriffen 54a-54c der Halbbrückenschaltungen 53a-53c - geschaltet. Die zweite Treiberstufe 41 umfasst im gezeigten Beispiel jeweils drei Schaltungszweige 56a-56c. Jeder der Schaltungszweige 56a-56c umfasst dabei eine Reihenschaltung aus zwei steuerbaren Leistungsschaltern T7/T8; T9/T10; T11/T12, die bezüglich derer Laststrecken antiparallel angeordnet sind. Die steuerbaren Leistungsschalter T7/T8; T9/T10; T11/T12 sind dazu ausgelegt, am Lastausgang 15a-15c einen dritten Spannungslevel, der zwischen dem ersten und dem zweiten Spannungslevel liegt, bereitzustellen.

Zu Ansteuerung der jeweiligen steuerbaren Leistungsschalter weist die Steuereinrichtung 45 eine erste Steuereinheit 45a und eine zweite Steuereinheit 45b auf. Die erste Steuereinheit 45a ist dazu ausgebildet, die Leistungsschalter T1-T6 der ersten Treiberstufe 40 anzusteuern. Die zweite Steuereinheit 45b ist dazu ausgebildet, die Leistungsschalter T7-T12 der zweiten Treiberstufe 41 anzusteuern.

Bei dem Ausführungsbeispiel in Figur 4 ist der Wechselrichter 13 hybrid ausgebildet. In diesem Falle sind die Leistungsschalter des Wechselrichters 13 nicht in derselben Halbleitertechnologie hergestellt und/oder vom selben Schaltertyp. Insbesondere sind im gezeigten Beispiel die Leistungsschalter T1-T6 Si-IGBTs mit Si-Freilaufdioden ausgebildet. Die Leistungsschalter T7-T12 sind als SiC-MOSFETs ausgebildet.

Alternativ (nicht in Fig. 4 gezeigt) können die Leistungsschalter T7-T12 als SiC-MOSFETs und die Leistungsschalter T1-T6 als GaN-MOSFETs ausgebildet sind.

Alternativ (ebenfalls nicht in Fig. 4 gezeigt) können die Leistungsschalter T7-T12 als IGBT mit Freilaufdiode und die Leistungsschalter T1-T6 als GaN-Leistungsschalter, insbesondere als GaN-MOSFETs, ausgebildet sind.

Alternativ (ebenfalls nicht in Fig. 4 gezeigt) können in einer so genannten homogenen Wechselrichtertopologie alle Leistungsschalter T1-T12 des Wechselrichters 13 vom selben Schaltertyps sein und/oder mit derselben Halbleitertechnologie hergestellt sein, zum Beispiel als GaN-Leistungsschalter, SiC-Leistungsschalter, wie etwa SiC-MOSFETs, ausgelegt.

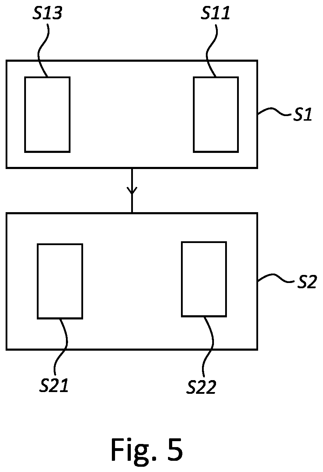

Figur 5 zeigt anhand eines Flussdiagramms ein erfindungsgemäßes Verfahren zum Betreiben eines elektrischen Antriebssystems. Das elektrische Antriebssystem, welches beispielsweise ein Antriebssystem entsprechend Figur 1 sein kann, weist dabei eine mit einem Doppelrotor ausgestattete Synchronmaschine auf. Der Doppelrotor ist aus flussführendem Material aus Vollmaterial aufgebaut.

In einem ersten Schritt S1 wird die Gesamteffizienz des elektrischen Antriebssystems ermittelt, beispielsweise offline. Hierzu wird zunächst der Phasenstrom der elektrischen Maschine des elektrischen Antriebssystems erfasst (S11). Zusätzlich wird optional zumindest eine weitere die Gesamteffizienz beeinflussende Eigenschaft (S13) der elektrischen Maschine ermittelt.

Aus all diesen Informationen wird in einem nächsten Schritt S2 die Synchronmaschine betrieben. Hierzu wird eine steuerbare drei- oder mehrstufige Wechselrichterschaltung verwendet. Der steuerbare drei- oder mehrstufige Wechselrichter der Wechselrichterschaltung wird dabei in Abhängigkeit der Gesamteffizienz des elektrischen Antriebssystems sowie des diese beeinflussenden Parameters und optional Eigenschaften entweder sowohl im drei- oder mehrstufigen Betriebsmodus S21 oder im zwei-stufigen Betriebsmodus S22 betrieben.

Denkbar wäre auch eine Mischform aus drei- oder mehrstufigem Betrieb und zwei-stufigem Betrieb. Eine solche Mischbetriebsform wäre beispielsweise bei einem Übergang vom drei- oder mehrstufigen Betrieb in den zwei-stufigen Betrieb denkbar und vorteilhaft, um zum Beispiel ein hartes Umschalten zu vermeiden. Letzteres könnte mit Verlusten und somit Effizienzeinbu-ßen einhergehen.

### Bezugszeichenliste

- 10: elektrisches Antriebssystem
- 11: elektrische Maschine, Synchronmaschine
- 12: (drei- oder mehrstufige) Wechselrichterschaltung
- 13: (drei- oder mehrstufiger) Wechselrichter
- 14: Betriebsmodus-Einstelleinrichtung
- 15: Lastausgang
- 15a-15c: Ausgangslastanschluss
- 16, 17: Versorgungsanschlüsse
- 18: Versorgungsspannungsquelle
- 20: Doppelrotor, Doppelrotormaschine
- 21: äußerer Rotor
- 22: innerer Rotor
- 23: Stator
- 24, 25: gegenpolige Magnete (des äußeren Rotors)
- 26: (äußerer) Luftspalt
- 27: (äußere) Flusslinien
- 28, 29: gegenpolige Magnete (des inneren Rotors)
- 30: (innerer) Luftspalt
- 31: (innere) Flusslinien
- 40: erste (äußere) Treiberstufe
- 41: zweite (innere) Treiberstufe
- 42: Auswerteeinrichtung
- 43: erste Messeinrichtung
- 45: Steuereinrichtung
- 46: Optimierungsmodul
- 47: Sensoreingang
- 50: Zwischenkreisschaltung
- 51, 52: Zwischenkreiskondensatoren
- 53a-53c: Halbbrückenschaltung
- 54a-54c: Mittelabgriffe
- 55: Mittelabgriff
- I1: (mehrphasiger) Laststrom
- S1, S2: Verfahrensschritte
- S11, S13: Unterschritte
- S21, S22: Unterschritte
- T1 - T3: erste Leistungsschalter der Halbbrückenschaltung, High-Side-Schalter
- T4 - T6: zweite Leistungsschalter der Halbbrückenschaltung, Low-Side-Schalter
- T7 - T12: Leistungsschalter
- VAC: (ausgangsseitige) Wechselspannung
- VDC: (eingangsseitige) Gleichspannung
- V11: (positives) Versorgungspotenzial
- V12: (negatives) Versorgungspotenzial, Bezugspotenzial

## Patentansprüche

1. Elektrisches Antriebssystem (10) zum Antreiben eines Kraftfahrzeugs,
mit zumindest einer mehrphasigen elektrischen Maschine (11), die einen Doppelrotor (20) aufweist, **dadurch gekennzeichnet, dass** der Doppelrotor (20) aus flussführendem Material aus Vollmaterial aufgebaut ist,
mit einer drei- oder mehrstufigen Wechselrichterschaltung (12) zum Antreiben der elektrischen Maschine (11), welche aufweist:
- einen ausgangsseitig mit der elektrischen Maschine (11) gekoppelten steuerbaren drei- oder mehrstufigen Wechselrichter (13), welcher dazu ausgelegt ist, die elektrische Maschine (11) mit einer Wechselspannung (VAC) zu versorgen, und
- eine Betriebsmodus-Einstelleinrichtung (14), welche dazu ausgelegt ist, den Wechselrichter (13) in Abhängigkeit nur eines die Gesamteffizienz des elektrischen Antriebssystems (10) beeinflussenden Parameters wahlweise entweder in einem drei- oder mehrstufigen Betrieb oder in einem zwei-stufigen Betrieb zu betreiben, wobei die Betriebsmodus-Einstelleinrichtung (14) eine Auswerteeinrichtung (42) aufweist, welche dazu ausgelegt ist, anhand des Phasenstroms sowie optional zumindest einer weiteren Eigenschaft eine Optimierung der Gesamteffizienz vorzunehmen.

2. Antriebssystem nach Anspruch 1,
**dadurch gekennzeichnet,**
**dass** die elektrische Maschine (11) als Synchronmaschine (11) ausgebildet ist, insbesondere als ein von einem Dreiphasenwechselrichter angesteuerter dreiphasiger Synchronmotor.

3. Antriebssystem nach einem der vorherigen Ansprüche,
**dadurch gekennzeichnet,**
**dass** die Wechselrichterschaltung (12) ferner aufweist:
- zwei Versorgungsanschlüsse (16, 17), die mit einem ersten und einem zweiten Versorgungspotential (V11, V12) einer Spannungsversorgung (19) koppelbar sind,
- einen Lastausgang (15), der für jede Phase der elektrischen Maschine (11) einen Lastausgangsanschluss (15a-15c) aufweist und über den die Wechselrichterschaltung (12) mit der elektrischen Maschine (11) gekoppelt ist,
wobei die Wechselrichterschaltung (12) dazu ausgelegt ist, eine versorgungsseitig aufgenommene Gleichspannung (VDC) in eine Wechselspannung (VAC) zum Antreiben einer an dem Lastausgang (15) angeschlossenen elektrischen Maschine (11) zu wandeln.

4. Antriebssystem nach einem der vorherigen Ansprüche,
**dadurch gekennzeichnet,**
**dass** die Betriebsmodus-Einstelleinrichtung (14) ferner dazu ausgelegt ist, den Wechselrichter (13) in Abhängigkeit des erfassten Phasenstroms der elektrischen Maschine (11) zu betreiben.

5. Antriebssystem nach einem der vorherigen Ansprüche,
**dadurch gekennzeichnet,**
**dass** die Auswerteeinrichtung (42) dazu vorgesehen ist, die Gesamteffizienz zu berechnen, beispielsweise analytisch und/oder anhand eines vorgegebenen Kennlinienfelds zu ermitteln.

6. Antriebssystem nach einem der Ansprüche 5,
**dadurch gekennzeichnet,**
**dass** die Auswerteeinrichtung (42) ein Optimierungsmodul (46) aufweist, welches dazu ausgebildet ist, die Gesamteffizienz zunächst zu berechnen und/oder anschließend über eine Optimierungsfunktion die Gesamteffizienz numerisch, analytisch oder über eine Lookup-Tabelle zu optimieren.

7. Antriebssystem nach einem der vorherigen Ansprüche,
**dadurch gekennzeichnet,**
**dass** die Betriebsmodus-Einstelleinrichtung (14) eine erste Messeinrichtung (43) aufweist, die einen Sensoreingang (47) aufweist, über den die erste Messeinrichtung (43) mit der elektrischen Maschine (11) koppelbar ist, wobei die erste Messeinrichtung (43) dazu ausgebildet ist, den Phasenstrom der elektrischen Maschine (11) zu erfassen,
und/oder dass der Wechselrichter (13) eine T-Typ neutralpunkt geklemmte Wechselrichterarchitektur beinhaltet.

8. Antriebssystem nach einem der vorstehenden Ansprüche,
**dadurch gekennzeichnet,**
**dass** der Wechselrichter (13) eine erste Treiberstufe (40) und zumindest eine zweite Treiberstufe (41) aufweist, wobei die zweite Treiberstufe (41) dazu ausgelegt ist, Ausgangslastströme an den Lastausgang (15) zu führen, welche kleiner sind als die von der ersten Treiberstufe (40) bereit gestellten Ausgangslastströme.

9. Antriebssystem nach Anspruch 8,
**dadurch gekennzeichnet,**
**dass** die Betriebsmodus-Umschalteinrichtung (14) eine Steuereinrichtung (45) aufweist, welche dazu ausgelegt ist, den Wechselrichter (13) derart zu steuern, dass im drei- oder mehrstufigen Betrieb die erste Treiberstufe (40) sowie die zweite Treiberstufe (41) aktiviert sind und im zwei-stufigen Betrieb zumindest eine der zweiten Treiberstufen (41) deaktiviert ist,
und/oder dass die erste Treiberstufe (40) zumindest eine Brückenschaltung (53a - 53c), insbesondere eine Halbbrückenschaltung (53a - 53c), aufweist, deren Mittelabgriff (54a - 54c) den Ausgangslastanschluss (15a - 15c) der Wechselrichterschaltung (12) bildet, wobei jede Brückenschaltung (53a - 53c) zumindest einen ersten Leistungsschalter (T1 - T3) aufweist, welcher mit einem ersten Versorgungsanschluss (16) verbunden ist und welche dazu ausgelegt ist, am Lastausgang (15) eine erste Spannungsstufe bereitzustellen, und wobei jede Brückenschaltung (53a - 53c) ferner zumindest einen zweiten Leistungsschalter (T4 - T6) aufweist, welche mit einem zweiten Versorgungsanschluss (17) verbunden sind und welche dazu ausgelegt sind, am Lastausgang (15) eine zweite Spannungsstufe bereitzustellen,
und/oder dass die zweite Treiberstufe (41) zumindest einen dritten Leistungsschalter (T7 - T12) aufweist, deren Laststrecken in Reihe zwischen einer Zwischenkreisschaltung (50) und dem Mittelabgriff (54a - 54c) der ersten Treiberstufe (50) geschaltet sind und welche dazu ausgelegt sind, am Lastausgang (15) eine dritte Spannungsstufe, der zwischen der ersten und dem zweiten Spannungsstufe liegt, bereitzustellen.

10. Antriebssystem nach einem der vorherigen Ansprüche,
**dadurch gekennzeichnet,**
**dass** alle Leistungsschalter (T1 - T12) des Wechselrichters (13) als Halbleiterschalter desselben Schaltertyps und/oder derselben Halbleitertechnologie ausgebildet sind,
wobei die Halbleiterschalter (T1 - T12) insbesondere als GaN-Leistungsschalter und/oder SiC-Leistungsschalter, insbesondere als SiC-MOSFETs, ausgelegt sind.

11. Antriebssystem nach einem der Ansprüche 1 bis 10,
**dadurch gekennzeichnet,**
**dass** für die Halbleiterschalter (T1 - T12) des Wechselrichters (13) zumindest zwei unterschiedliche Schaltertypen und/oder zumindest zwei unterschiedliche Halbleitertechnologien vorgesehen sind.

12. Antriebssystem nach Anspruch 11,
**dadurch gekennzeichnet,**
**dass** die Halbleiterschalter (T1 - T12) der ersten Treiberstufe (40) als IGBTs mit Freilaufdiode ausgebildet sind und dass die Halbleiterschalter (T1 - T12) der zweiten Treiberstufe (41) als SiC-Leistungsschalter, insbesondere als SiC-MOSFETs, ausgebildet sind,
oder dass die Halbleiterschalter (T1 - T12) der ersten Treiberstufe (40) als SiC-MOSFETs ausgelegt sind und dass die Halbleiterschalter (T1 - T12) der zweiten Treiberstufe (41) als GaN-MOSFETs ausgelegt sind,
oder dass die Halbleiterschalter (T1 - T12) der ersten Treiberstufe (40) als IGBT mit Freilaufdiode ausgelegt sind und dass die Halbleiterschalter (T1 - T12) der zweiten Treiberstufe (41) als GaN-Leistungsschalter, insbesondere als GaN-MOSFETs, ausgelegt sind.

13. Antriebssystem nach einem der vorherigen Ansprüche,
**dadurch gekennzeichnet,**
**dass** das flussführende Material im Rotor (21, 22) aus Eisen oder einer Eisenlegierung besteht,
oder die elektrische Maschine (11) einen Stator (23) mit einem Ständer aufweist, wobei der Ständer zur Führung eines vorrangig radialen Magnetflusses, insbesondere zur Vermeidung einer Magnetflussführung in tangentialer Richtung, ausgebildet ist, wobei der Ständer des Stators (23) insbesondere eine radiale Jochdicke aufweist, welche weniger als 30%, vorzugsweise weniger als 20%, besonders bevorzugt weniger als 10% einer gesamten radialen Ständerdicke beträgt.

14. Antriebssystem nach einem der vorherigen Ansprüche,
**dadurch gekennzeichnet,**
**dass** die elektrische Maschine (11) ein Radnabenmotor für ein elektrisch betreibbares Kraftfahrzeug ist.

15. Verfahren zum Betreiben eines elektrischen Antriebssystems (10) nach einem der Ansprüche 1 bis 14,
wobei die Synchronmaschine (11) mittels eines steuerbaren drei- oder mehrstufigen Wechselrichters (13) in Abhängigkeit einer Gesamteffizienz des elektrischen Antriebssystems (10) sowohl in einem drei- oder mehrstufigen Betriebsmodus als auch in einem zwei-stufigen Betriebsmodus betreibbar ist.

## Claims

1. Electrical drive system (10) for driving a motor vehicle, comprising at least one multiphase electrical machine (11) having a double rotor (20), **characterised in that** the double rotor (20) is constructed from flux-carrying material consisting of solid material,
comprising a three-stage or multi-stage inverter circuit (12) for driving the electrical machine (11), which has:
- an controllable three-stage or multi-stage inverter (13), which is coupled at the output side to the electrical machine (11) and which is configured to supply the electrical machine (11) with an AC voltage (VAC), and
- an operating mode setting device (14), which is configured to operate the inverter (13) selectively either in a three-stage or multi-stage operation or in a two-stage operation, solely as a factor of a parameter which influences the overall efficiency of the electrical drive system (10), the operating mode setting device (14) having an evaluation device (42) which is configured to optimise the overall efficiency, by way of the phase current and optionally at least one further property.

2. Drive system according to claim 1,
**characterised**
**in that** the electrical machine (11) is formed as a synchronous machine (11), in particular as a three-phase synchronous motor actuated by a three-phase inverter.

3. Drive system according to any of the preceding claims, **characterised**
**in that** the inverter circuit (12) further has:
- two supply terminals (16, 17), which can be coupled to a first and a second supply potential (V11, V12) of a voltage supply (19),
- a load output (15), which has a load output terminal (15a - 15c) for each phase of the electrical machine (11) and via which the inverter circuit (12) is coupled to the electrical machine (11),
the inverter circuit (12) being configured to convert a DC voltage (VDC) received on the supply side into an AC voltage (VAC) for driving an electrical machine (11) connected to the load output (15).

4. Drive system according to any of the preceding claims,
**characterised**
**in that** the operating mode setting device (14) is further configured to operate the inverter (13) as a function of the detected phase current of the electrical machine (11).

5. Drive system according to any of the preceding claims,
**characterised**
**in that** the evaluation device (42) is provided to calculate the overall efficiency, for example analytically and/or by way of a predetermined performance map.

6. Drive system according to any of claims 5,
**characterised**
**in that** the evaluation device (42) has an optimisation module (46), which is formed initially to calculate the overall efficiency and/or subsequently to optimise the overall efficiency numerically, analytically or via a lookup table, using an optimisation function.

7. Drive system according to any of the preceding claims, **characterised**
**in that** the operating mode setting device (14) has a first measurement device (43), which has a sensor input (47) via which the first measurement device (43) can be coupled to the electrical machine (11), the first measurement device (43) being formed to detect the phase current of the electrical machine (11),
and/or in that the inverter (13) includes a T-type neutral-point-clamped inverter architecture.

8. Drive system according to any of the preceding claims, **characterised**
**in that** the inverter (13) has a first driver stage (40) and at least one second driver stage (41), the second driver stage (41) being configured to pass output load currents to the load output (15) which are less than the output load currents provided by the first driver stage (40).

9. Drive system according to claim 8,
**characterised**
**in that** the operating mode switching device (14) has a control device (45), which is configured to control the inverter (13) in such a way that both the first driver stage (40) and the second driver stage (41) are activated in the three-stage or multi-stage operation, and at least one of the second driver stages (41) is deactivated in the two-stage operation,
and/or in that the first driver stage (40) has at least one bridge circuit (53a - 53c), in particular a half-bridge circuit (53a - 53c), the central pickup (54a - 54c) of which forms the output load terminal (15a - 15c) of the inverter circuit (12), each bridge circuit (53a - 53c) having at least one first power switch (T1 - T3), which is connected to a first supply terminal (16) and is configured to provide a first voltage level at the load output (15), and each bridge circuit (53a - 53c) further having at least one second power switch (T4 - T6), these being connected to a second supply terminal (17) and being configured to provide a second voltage level at the load output (15),
and/or in that the second driver stage (41) has at least one third power switch (T7 - T12), the load paths of these being connected in series between an intermediate circuit (50) and the central pickup (54a - 54c) of the first driver stage (50) and being configured to provide a third voltage level, which is between the first and the second voltage level, at the load output (15).

10. Drive system according to any of the preceding claims, **characterised**
**in that** all power switches (T1 - T12) of the inverter (13) are formed as semiconductor switches of the same switch type and/or the same semiconductor technology,
the semiconductor switches (T1 - T12) in particular being configured as GaN power switches and/or SiC power switches, in particular as SiC MOSFETs.

11. Drive system according to any of claims 1 to 10, **characterised**
**in that** at least two different switch types and/or at least two different semiconductor technologies are provided for the semiconductor switches (T1 - T12) of the inverter (13).

12. Drive system according to claim 11,
**characterised**
**in that** the semiconductor switches (T1 - T12) of the first driver stage (40) are formed as IGBTs having a freewheeling diode and in that the semiconductor switches (T1 - T12) of the second driver stage (41) are formed as SiC power switches, in particular as SiC MOSFETs,
or in that the semiconductor switches (T1 - T12) of the first driver stage (40) are configured as SiC MOSFETs and in that the semiconductor switches (T1 - T12) of the second driver stage (41) are configured as GaN MOSFETs,
or in that the semiconductor switches (T1 - T12) of the first driver stage (40) are configured as IGBTs having a freewheeling diode and in that the semiconductor switches (T1 - T12) of the second driver stage (41) are configured as GaN power switches, in particular as GaN MOSFETs.

13. Drive system according to any of the preceding claims, **characterised**
**in that** the flux-carrying material in the rotor (21, 22) consists of iron or an iron alloy,
or the electrical machine (11) has a stator (23) comprising a column, the column being formed to guide a predominantly radial magnetic flux, in particular to prevent magnetic flux guidance in a tangential direction,
the column of the stator (23) in particular having a radial yoke thickness which is less than 30%, preferably less than 20%, particularly preferably less than 10% of a total radial column thickness.

14. Drive system according to any of the preceding claims, **characterised**
**in that** the electrical machine (11) is a wheel hub motor for an electrically operable motor vehicle.

15. Method for operating an electrical drive system (10) according to any of claims 1 to 14,
wherein the synchronous machine (11) is operable both in a three-stage or multi-stage operating mode and in a two-stage operating mode, as a function of an overall efficiency of the electrical drive system (10), by means of a controllable three-stage or multi-stage inverter (13).

## Revendications

1. Système d'entraînement électrique (10) pour entraîner un véhicule automobile,
comportant au moins une machine électrique polyphasée (11) qui présente un double rotor (20), **caractérisé en ce que** le double rotor (20) est constitué d'un matériau conducteur de flux en matériau plein,
comportant un circuit onduleur à trois ou plusieurs étages (12) pour entraîner la machine électrique (11), lequel présente :
- un onduleur à trois ou plusieurs étages (13) commandable, couplé côté sortie à la machine électrique (11), qui est conçu pour alimenter la machine électrique (11) en une tension alternative (VAC), et
- un dispositif de réglage de mode de fonctionnement (14) qui est conçu pour faire fonctionner l'onduleur (13) en fonction d'un seul paramètre influençant le rendement global du système d'entraînement électrique (10) sélectivement soit en un fonctionnement à trois ou plusieurs étages, soit en un fonctionnement à deux étages, le dispositif de réglage de mode de fonctionnement (14) présentant un dispositif d'évaluation (42) qui est conçu pour procéder à une optimisation du rendement global à l'aide du courant de phase ainsi que, en option, d'au moins une autre propriété.

2. Système d'entraînement selon la revendication 1,
**caractérisé en ce**
**que** la machine électrique (11) est réalisée sous la forme d'une machine synchrone (11), en particulier d'un moteur synchrone triphasé commandé par un onduleur triphasé.

3. Système d'entraînement selon l'une des revendications précédentes,
**caractérisé en ce**
**que** le circuit onduleur (12) présente en outre :
- deux bornes d'alimentation (16, 17) pouvant être couplées à un premier et un deuxième potentiel d'alimentation (V11, V12) d'une alimentation en tension (19),
- une sortie de charge (15) qui présente une borne de sortie de charge (15a - 15c) pour chaque phase de la machine électrique (11) et par l'intermédiaire de laquelle le circuit onduleur (12) est couplé à la machine électrique (11),
le circuit onduleur (12) étant conçu pour convertir une tension continue (VDC) absorbée côté alimentation en une tension alternative (VAC) pour entraîner une machine électrique (11) connectée à la sortie de charge (15).

4. Système d'entraînement selon l'une des revendications précédentes,
**caractérisé en ce**
**que** le dispositif de réglage de mode de fonctionnement (14) est en outre conçu pour faire fonctionner l'onduleur (13) en fonction du courant de phase détecté de la machine électrique (11).

5. Système d'entraînement selon l'une des revendications 5, **caractérisé en ce**
**que** le dispositif d'évaluation (42) est prévu pour calculer le rendement global, par exemple de manière analytique et/ou à l'aide d'un champ de courbes caractéristiques prédéfini.

6. Système d'entraînement selon l'une des revendications précédentes,
**caractérisé en ce**
**que** le dispositif d'évaluation (42) présente un module d'optimisation (46) qui est conçu pour calculer d'abord le rendement global et/ou optimiser ensuite le rendement global de manière numérique, analytique ou à l'aide d'une table de correspondance via une fonction d'optimisation.

7. Système d'entraînement selon l'une des revendications précédentes,
**caractérisé en ce**
**que** le dispositif de réglage de mode de fonctionnement (14) présente un premier dispositif de mesure (43) qui présente une entrée de capteur (47) par l'intermédiaire de laquelle le premier dispositif de mesure (43) peut être couplé à la machine électrique (11), le premier dispositif de mesure (43) étant conçu pour détecter le courant de phase de la machine électrique (11),
et/ou que l'onduleur (13) comprend une architecture d'onduleur de type T à point neutre fixé.

8. Système d'entraînement selon l'une des revendications précédentes,
**caractérisé en ce**
**que** l'onduleur (13) présente un premier étage d'attaque (40) et au moins un deuxième étage d'attaque (41), le deuxième étage d'attaque (41) étant conçu pour transmettre à la sortie de charge (15) des courants de charge de sortie qui sont inférieurs aux courants de charge de sortie fournis par le premier étage d'attaque (40) .

9. Système d'entraînement selon la revendication 8,
**caractérisé en ce**
**que** le dispositif de commutation de mode de fonctionnement (14) présente un dispositif de commande (45) qui est conçu pour commander l'onduleur (13) de telle sorte que, en fonctionnement à trois ou plusieurs étages, le premier étage d'attaque (40) ainsi que le deuxième étage d'attaque (41) sont activés et qu'en fonctionnement à deux étages, au moins l'un des deuxièmes étages d'attaque (41) est désactivé,
et/ou que le premier étage d'attaque (40) présente au moins un circuit en pont (53a - 53c) en particulier un circuit en demi-pont (53a - 53c) dont la prise médiane (54a - 54c) forme la borne de charge de sortie (15a - 15c) du circuit onduleur (12), chaque circuit en pont (53a - 53c) présentant au moins un premier commutateur de puissance (T1 - T3) qui est relié à une première borne d'alimentation (16) et qui est conçu pour fournir un premier niveau de tension à la sortie de charge (15), et chaque circuit en pont (53a - 53c) présentant en outre au moins un deuxième commutateur de puissance (T4 - T6) qui est relié à une deuxième borne d'alimentation (17) et qui est conçu pour fournir un deuxième niveau de tension à la sortie de charge (15),
et/ou que le deuxième étage d'attaque (41) présente au moins un troisième commutateur de puissance (T7 - T12) dont les circuits de charge sont montés en série entre un circuit intermédiaire (50) et la prise médiane (54a - 54c) du premier étage d'attaque (50) et qui sont conçus pour fournir à la sortie de charge (15) un troisième niveau de tension qui se situe entre le premier et le deuxième niveau de tension.

10. Système d'entraînement selon l'une des revendications précédentes,
**caractérisé en ce**
**que** tous les commutateurs de puissance (T1 - T12) de l'onduleur (13) sont réalisés sous la forme de commutateurs à semi-conducteurs du même type de commutateurs et/ou de la même technologie de semi-conducteurs,
les commutateurs à semi-conducteurs (T1 - T12) étant en particulier conçus comme des commutateurs de puissance GaN et/ou des commutateurs de puissance SiC, en particulier comme des MOSFET SiC.

11. Système d'entraînement selon l'une des revendications 1 à 10,
**caractérisé en ce**
**que** pour les commutateurs à semi-conducteurs (T1 - T12) de l'onduleur (13), au moins deux types de commutateurs différents et/ou au moins deux technologies de semi-conducteurs différentes sont prévus.

12. Système d'entraînement selon la revendication 11,
**caractérisé en ce**
**que** les commutateurs à semi-conducteurs (T1 - T12) du premier étage d'attaque (40) sont réalisés sous la forme d'IGBT avec diode de roue libre et que les commutateurs à semi-conducteurs (T1 - T12) du deuxième étage d'attaque (41) sont réalisés sous la forme de commutateurs de puissance SiC, en particulier de MOSFET SiC,
ou que les commutateurs à semi-conducteurs (T1 - T12) du premier étage d'attaque (40) sont réalisés sous la forme de MOSFET SiC et que les commutateurs à semi-conducteurs (T1 - T12) du deuxième étage d'attaque (41) sont réalisés sous la forme de MOSFET GaN, ou que les commutateurs à semi-conducteurs (T1 - T12) du premier étage d'attaque (40) sont réalisés sous la forme d'IGBT avec diode de roue libre et que les commutateurs à semi-conducteurs (T1 - T12) du deuxième étage d'attaque (41) sont réalisés sous la forme de commutateurs de puissance GaN, en particulier de MOSFET GaN.

13. Système d'entraînement selon l'une des revendications précédentes,
**caractérisé en ce**
**que** le matériau conducteur de flux dans le rotor (21, 22) est constitué de fer ou d'un alliage de fer,
ou que la machine électrique (11) présente un stator (23) avec un induit, l'induit étant conçu pour guider un flux magnétique principalement radial, en particulier pour éviter un guidage du flux magnétique dans la direction tangentielle,
l'induit du stator (23) présentant en particulier une épaisseur de culasse radiale qui est inférieure à 30 %, de préférence inférieure à 20 %, de manière particulièrement préférée inférieure à 10 % d'une épaisseur radiale totale de l'induit.

14. Système d'entraînement selon l'une des revendications précédentes,
**caractérisé en ce**
**que** la machine électrique (11) est un moteur de moyeu de roue pour un véhicule automobile à propulsion électrique.

15. Procédé pour faire fonctionner un système d'entraînement électrique (10) selon l'une des revendications 1 à 14,
dans lequel la machine synchrone (11) peut être amenée à fonctionner, au moyen d'un onduleur (13) commandable à trois ou plusieurs étages, en fonction d'un rendement global du système d'entraînement électrique (10) aussi bien dans un mode de fonctionnement à trois ou plusieurs étages que dans un mode de fonctionnement à deux étages.
